# EUROPEAN PATENT APPLICATION

(11) **EP 2 503 578 A1**
(43) Date of publication of application: **26.09.2012**
(21) Application number: 11159084.0
(22) Date of filing: 21.03.2011
(51) Int. Cl.: H01H 13/83, G02B 6/00

(54) **System and method for keypad light guide optical features and coatings**

(71) Applicant: Research In Motion Limited, Waterloo, ON N2L 3W8 (CA)
(72) Inventor: Prsa, Steven A., Waterloo Ontario N2L 3L3 (CA); Chen, Chao, Waterloo Ontario N2L 3L3 (CA); Coulson, Simon Edward, Waterloo Ontario N2L 3L3 (CA)
(74) Representative: Fennell, Gareth Charles

(57) **Abstract**

Systems and methods are provided for a keypad assembly with optical features and coatings. In one exemplary embodiment, the keypad assembly for a portable electronic device includes a keypad including a plurality of keys and a light guide for transmitting light from at least one light source. The light guide includes at least one light source feature and at least one light guide feature, and the at least one light guide feature and the at least one light source feature have applied thereto a highly-reflective coating.

## Description

### TECHNICAL FIELD

The present disclosure generally relates to a system and method for improved keypad light guides and, more particularly, to a system and method for improved keypad light guide optical features and coatings.

### BACKGROUND

Numerous types of handheld electronic devices are known, such as, personal data assistants (PDAs), handheld computers, two-way pagers, cellular telephones, and the like. Because handheld electronic devices are generally intended to be portable, they are typically of a relatively compact configuration. To accommodate their portability, the design of such portable electronic devices focuses on ensuring that they are compact in size and light in weight.

Such portable electronic devices typically include data input and output capabilities, data transmitting and receiving capabilities, etc. One such common data input means is a keypad assembly to input data into the portable electronic device. A typical keypad assembly may be constructed with keys, dome switches, and the like. To light the keypad assembly, the portable electronic device may also include a plurality of light sources, such as light emitting diodes (LEDs), arranged to light the keys of the keypad, and a light guide to transmit and direct the light from the light sources to the keypad assembly.

### BRIEF DESCRIPTION OF THE DRAWINGS

The accompanying drawings, which are incorporated in and constitute a part of this disclosure, illustrate aspects consistent with the present disclosure and, together with the description, serve to explain advantages and principles of the present disclosure. In the drawings:

FIG. 1 illustrates an exemplary portable electronic device, consistent with certain disclosed embodiments;

FIG. 2a illustrates an exemplary keypad assembly, consistent with certain disclosed embodiments;

FIG. 2b illustrates an example light guide used in exemplary keypad assembly, consistent with certain disclosed embodiments;

FIG. 2c illustrates a cutaway diagram of the exemplary keypad assembly of FIG. 2a, consistent with certain disclosed embodiments; and

FIG. 3 is a flowchart illustrating a method for applying a highly-reflective coating, consistent with certain disclosed embodiments.

### DETAILED DESCRIPTION

Numerous light source layouts and light guide systems facilitate the use of a keypad, including the keys for multiple letters, digits, symbols, and the like, provided on handheld electronic devices. Light sources, such as LEDs, may be provided on a printed substrate, and light may be transmitted to an entire keypad assembly via a light guide. LEDs may be disposed between keys, rather than vertically aligned with any given key. To direct light back through the light guide, a light source feature may be vertically disposed above the LED. Similarly, one or more light guide features may be disposed throughout the light guide to redirect light from the LEDs.

In some keypad assemblies, a large number of LEDs may be required to light an entire keypad. Often in keypad assemblies, the light emitted from the LEDs to the keys may be lost through the light guide and light source features, so that the illumination of the keys becomes non-uniform and dark. In addition, keypad assemblies may be prone to light losses and light hot spots, and may not provide optimal brightness, light uniformity, and improved light distribution.

In accordance with the present disclosure, as embodied and broadly described herein, a keypad assembly for a portable electronic device, comprises: a keypad including a plurality of keys; a light guide for transmitting light from at least one light source, wherein the light guide includes at least one light source feature and at least one light guide feature, and the at least one light guide feature and the at least one light source feature have applied thereto a reflective coating.

In accordance with the present disclosure, as embodied and broadly described herein, a light guide for transmitting light from at least one light source, comprises: at least one light source feature; and at least one light guide feature, wherein the at least one light guide feature and the at least one light source feature have applied thereto a reflective coating.

It is to be understood that both the foregoing general description and the following detailed description are exemplary and explanatory only and are not restrictive of the disclosure, as claimed.

The following detailed description refers to the accompanying drawings. Wherever possible, the same reference numbers will be used throughout the drawings and the following description to refer to the same or like parts. While several exemplary embodiments and features are described herein, modifications, adaptations and other implementations are possible, without departing from the spirit and scope of the disclosure. For example, substitutions, additions or modifications may be made to the components illustrated in the drawings, and the exemplary methods described herein may be modified by substituting, reordering or adding steps to the disclosed methods. Accordingly, the following detailed description does not limit the disclosure.

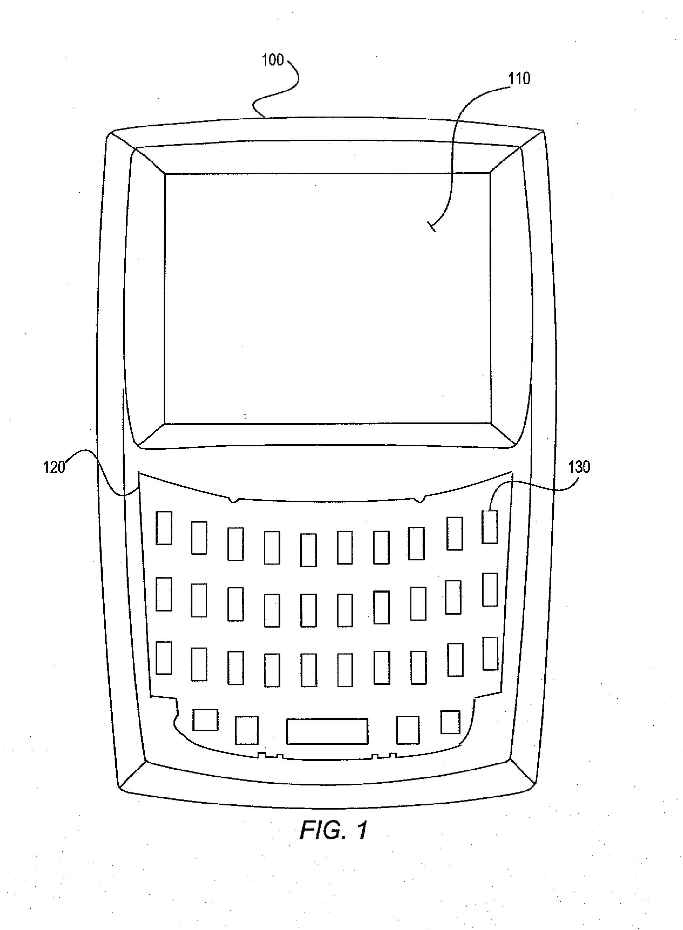

FIG. 1 is a diagram of an example handheld electronic device 100 in which systems and methods consistent with the present disclosure may be implemented. Specifically, FIG. 1 illustrates an example handheld electronic device 100 having keys arranged according to a QWERTY key arrangement. That is, handheld electronic device 100 of FIG. 1 is an embodiment having an arrangement of Latin letters associated with keys 130 where the letters are generally presented in an order corresponding to the order of a standard QWERTY keyboard. As shown in FIG. 1, handheld electronic device 100 may include display 110, keypad 120, and keys 130.

Display 110 may be any type of visual input/output configured to display one or more characters and/or receive input corresponding to one or more characters. In addition, display 110 may be configured to display one or more diagrams, figures, pictures, words, etc. and/or to receive input corresponding to one or more diagrams, figures, pictures, words, characters, etc. In some embodiments, display 110 may be touch-screen display 110, and may be configured to display respective representations of keypad 120 (i.e., virtual keypad) and keys 130 (i.e., virtual keys).

Keypad 120 may include any combination of keys 130. Keypad 120 and keys 130 may be of any configuration, such as a standard ITU E.161 key arrangement, an AZERTY key arrangement, a QWERTY key arrangement, a reduced QWERTY key arrangement, or other key arrangement whether reduced or not reduced. Although keypad 120 illustrated in FIG. 1 is configured such that it is on a generally same planar surface as display 110, in other embodiments, keypad 120 may be configured such that it is on a different planar surface than display 120, i.e., a so-called "pull-out" or "slidable" keypad 120.

Keys 130 may include buttons by which input may be received from a user. Each key 130 may be assigned one or more characters, symbols, codes, and/or operations. In some embodiments, keys 130 may be touch-sensitive, i.e., input may be received by one or more touches from a user. For example, characters associated with keys 130 in example handheld electronic device 100 can be selected by tapping or pressing on keys 130. That is, one or more characters may be associated with each key 130 such that when a user selects a desired key 130 an associated character may be displayed on display 110.

Characters may include, without limitation, any type of visual representation including, for example, Unicode characters; words in any language (e.g., Latin, Arabic, Cyrillic, Greek, etc.); letters in any language; digits of any numbering system (e.g., Roman, Arabic, decimal, hexadecimal, etc.); diacritical marks, such as accents (e.g., acute, double acute, grave, double grave, etc.), breve, caron, cedilla, circumflex, diaeresis, dot, hook, horn, macron, etc.; punctuation (e.g., period, comma, semicolon, colon, etc.); symbols and marks *(e.g.,* tilde, hash, percentage, ampersand, bar, hyphen, etc.); mathematical operators (e.g., plus, minus, equal, etc.); superscripts and subscripts; emoticons; etc. In some embodiments, characters may be printed on keys 130.

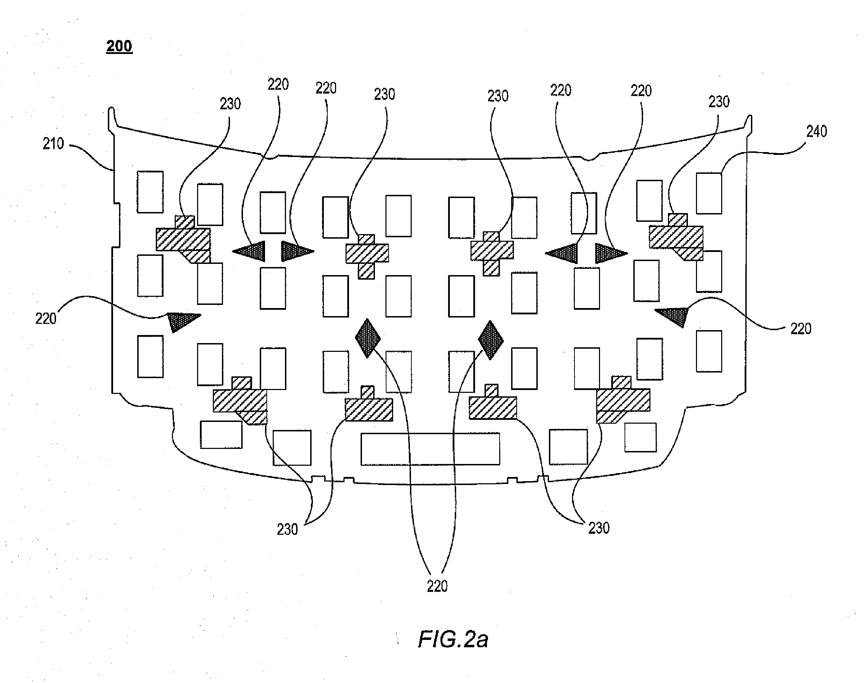

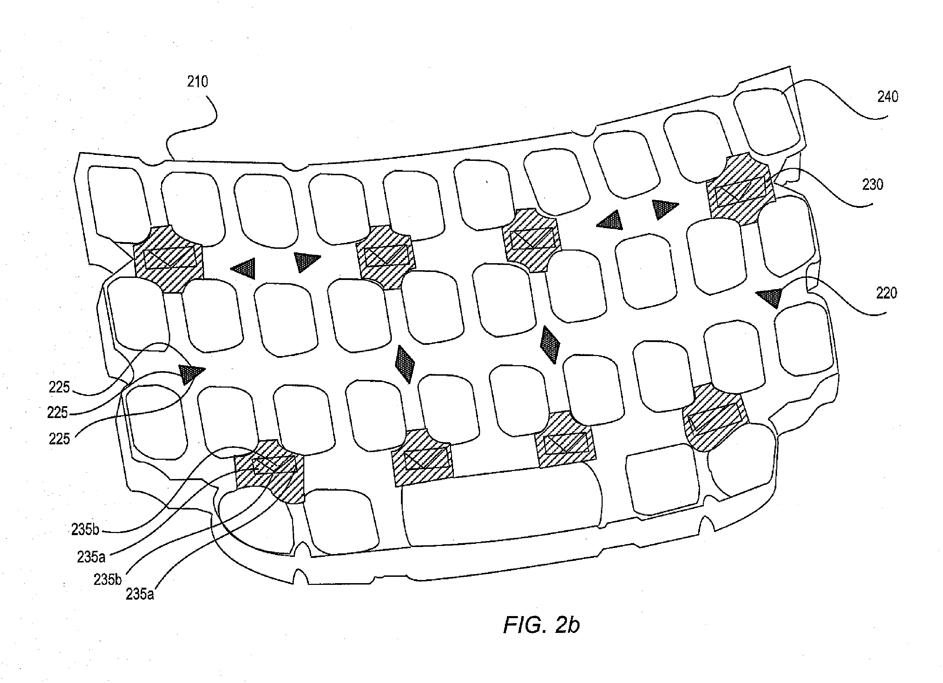

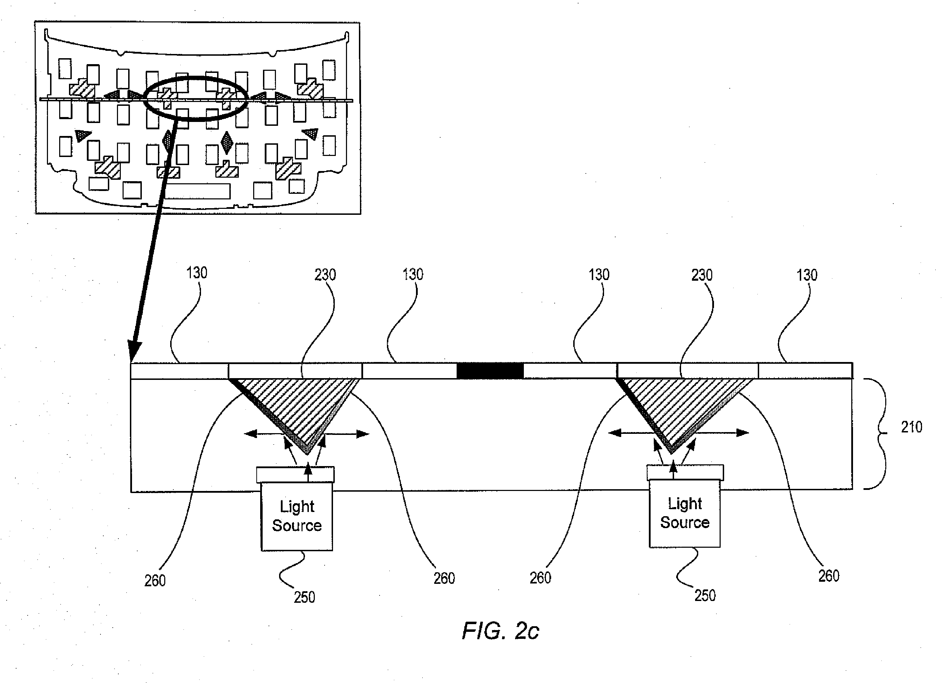

FIGS. 2a, 2b, and 2c are diagrams illustrating an example keypad assembly 200, consistent with certain disclosed embodiments. Specifically, FIG. 2a is a top-level view of keypad assembly 200, FIG. 2b is a three-dimensional diagram illustrating an example light guide 210 of keypad assembly 200 of FIG. 2a, and FIG. 2c is a cut-away diagram of keypad assembly 200 of FIG. 2a. Keypad assembly 200 may be used in a handheld electronic device, such as handheld electronic device 100 of FIG. 1, although the assembly may also be adapted to keypads for other classes of devices.

Referring to FIG. 2a, keypad assembly 200 may include light guide 210, light guide features 220, and light source features 230. Light guide 210 may be made of a material having a good transmittance in the visible light region, thereby allowing the light to be channeled through light guide 210. That is, light guide 210 may be comprised of any material that allows a maximum intensity of light rays to pass within light guide 210 with little change in direction caused by the material of light guide 210. In some embodiments, light guide 210 may be plastic. For example, light guide 210 may be Acrylonitrile Butadiene Styrene (ABS), polypropylene, styrene, etc. Light guide 210 may include both negative features (e.g., indentations) and positive features (e.g., protrusions). These negative and positive features of light guide 210 may be used to cause the direction of light waves through light guide 210 to be refracted and changed. The negative and positive features may be introduced by any method of plastic forming known in the art, including, for example, injection molding, vacuum forming, thermal forming, etc.

Referring to FIG. 2b, light guide features 220 and light source features 230 illustrated in example light guide 210 are negative features. In this example, light guide features 220 and light source features 230 may be small cut-out feature surfaces in light guide 210 that serve to bounce and move light within light guide 210. In the example embodiment illustrated in FIG. 2b, light guide features 220 may be negative features on the bottom plane of light guide 210, and light source features 230 may be negative features on the top plane of light guide 210.

The relative location of light guide features 220 to keys 130 and light source features 230 to light sources 250 (FIG. 2c) may be determined so as to cause light guide features 220 and light source features 230 to reflect the light from one or more light sources 250 to keys 130, giving a more uniform brightness to keypad 120. The number and location of light guide features 220 may be determined based on the number and arrangement of keys 130, and the number and location of light source features 230 may be determined based on the number and location of light sources 250. In some embodiments, light guide features 220 may be placed at other positions that are not dependent on the arrangement of keys 130. For example, it may be desirable to position light guide features 220 at positions from which the light guide features 220 can direct sufficient light toward keys 130 at the edges of keypad 120, which can be relatively dark.

Light guide features 220 and light source features 230 may be of any shape and may have one or more angles and/or inclined surfaces. In some embodiments, the shapes of light guide features 220 and light source features 230 may be determined according to desired reflection angles and/or directions. The shapes of light guide features 220 and light source features 230 may be convex and/or concave and may include, for example, polygonal shapes, triangular shapes (right, isosceles, obtuse, scalene, equilateral, etc.), pyramidal shapes, conical shapes, semi-conical shapes, etc. For example, light guide features 220 of FIGS. 2a-2c are illustrated as triangular in shape, having three surfaces that are inclined relative to a horizontal bottom plane of light guide 210 (e.g., surfaces 225 of FIG. 2b). As another example, light source features 230 of FIGS. 2a-2c are shown with two surfaces (e.g., surfaces 23 5 a of FIG. 2b) that are inclined relative to a horizontal top plane of light guide 210, and two surfaces (e.g., surfaces 235b of FIG. 2b) that are perpendicular to the horizontal top plane of light guide 210.

FIG. 2c is a cut-away diagram of FIG. 2a illustrating key assembly 200 in which a highly-reflective coating 260 has been applied to light guide 210. Specifically, FIG. 2c illustrates an embodiment in which light source feature 230 has an associated light source 250 disposed below, and the light source feature 230 has applied thereto a reflective coating.

Reflective coatings may be any suitable metallic material and/or any reflective coating layer coated on the metallic material. Suitable materials may include materials having a higher refractive index than light guide 210. For example, highly-reflective coating may be metallic sheeting or film, plastic sheeting or film, etc.

In FIG. 2c, one or more keys 130 may be proximally disposed on a top planar surface of light guide 210. Although not shown, keys 130 may be communicatively coupled to one or more processing devices that receive signals from keys 130 and process the received signals. Many configurations of keys 130 are disclosed in the art, and will not be discussed herein further.

In the example embodiment of FIG. 2c, light guide feature 230 may be vertically disposed above light source 250. In other embodiments, light source 250 may be disposed at other locations, including on a centerline of the keys. The number and location of light sources 250 may be determined, for example, by user constraints, a layout of the keys, an optimal or desired design for a particular keypad, an optimal or desired level of brightness and uniformity, etc.

Light source 250 may be optically coupled with light guide 210 for transmission of light into light guide 210. For example, light source 250 may be secured to a corner, edge, or other proximate location of light guide 210 using an optical adhesive. Light source 250 may be electrically coupled to a power source, such as, for example, a battery in handheld device 100. Light sources 250 may include, for example, LEDs, edge-emitting LEDs, organic LEDs (OLEDs), etc.

As illustrated in FIG. 2c, to enable more of the light to be bounced and reflected into and around light guide 210, reflective, highly reflective, or mirror-like coatings or materials may be applied to, or otherwise incorporated in, light guide features 220 and light source features 230. As shown by the arrows in FIG. 2c, the light from light sources 250 is mostly transmitted in a direction that is vertical to the top and bottom planar surfaces of light guide 210, while very little, if any, light is transmitted in a horizontal direction of light guide 210. The light transmitted from light sources 250 is directed by means of light source features 230 to light guide 210, which in turn horizontally transmits the light toward keys 130. As a result, the light introduced to light guide 210 may be subjected to nearly complete reflection at the boundary between light guide 210 and light source feature 230, so that almost all of the light is transmitted through light guide 210.

Although FIG. 2c illustrates the application of a highly-reflective coating to light source features 230, a highly-reflective coating maybe similarly applied to light guide features 220 (not shown). When the reflective coating or material is applied to internal light guide features 220, more light will be directed throughout light guide 210, and less light may be lost through the surface faces of light guide features 220.

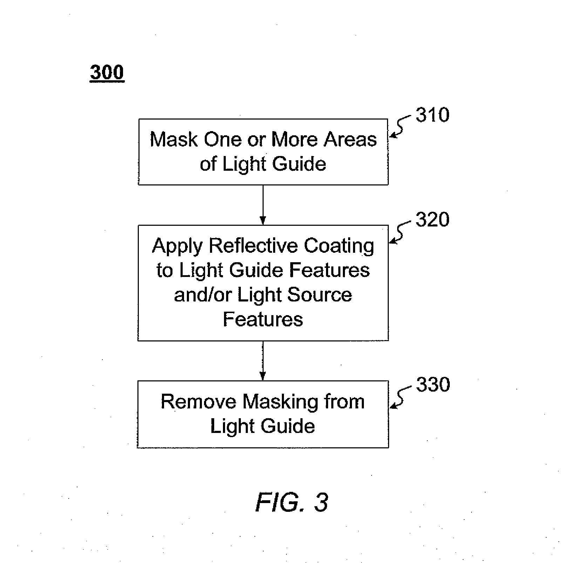

FIG. 3 is an example flowchart 300 illustrating application of a highly-reflective coating to light guide features 220 and light source features 230, in accordance with certain implementations. Specifically, FIG. 3 illustrates a flowchart 300 consistent with example implementations of the present disclosure in which highly-reflective coating is applied to light guide features 220 and light source features 230 of light guide 210 for use in a handheld electronic device, such as handheld electronic device 100.

As shown in FIG. 3, one or more areas of light guide 210 are masked (step 310). The one or more masked areas may include areas on a top planar surface, a bottom planar surface, and one or more side surfaces of light guide 210. When applying a mask to one or more areas of light guide 210, light guide features 220 and light source features 230 may be left unmasked, or exposed.

Next, a highly-reflective coating may be applied to the unmasked or exposed areas, such as light guide features 220 and light sources features 230 (step 320). In one exemplary embodiment, light guide 210 is placed in a chamber and a vacuum metallization (VM) or non-conductive vacuum metallization (NCVM) technique is used to apply the highly-reflective coating. In VM and NCVM techniques, metals may be applied to the one or more unmasked areas within a vacuum chamber by a deposition process. The metals may include any metal alloy. In some embodiments, the metal is an aluminum alloy.

Finally, after the application process is complete, the masking is removed from the one or more areas of light guide 210 (step 330). When light guide 210 is unmasked, only the light guide features 220 and light source features 230 are coated with the highly-reflective coating. In some embodiments, since the material of light guide 210 is a clear material, reflective layer 260 may be reflective on both sides of the light guide feature 220 face and/or light source feature 230 face to which it is applied.

In an alternative embodiment, when a reflective material is used, rather than a reflective coating, the reflective material may be cut into appropriate shapes from a reflective material sheet. The reflective material shapes may then be manually (or by machine, if possible) placed into the light guide features 220 and/or light source features 230.

In the disclosed embodiments, when highly-reflective, mirror-like coatings are applied to light guide features 220 and light source features 230, more of the light is bounced and reflected into and around light guide 210. In this manner, a fewer number of LEDs may be required to light an entire keypad. That is, because less of the light emitted from the LEDs to the keys is lost through the light guide feature and light source features, the illumination of the keys may become brighter and more uniform. In addition, there may be improved light distribution throughout the light guide.

It is intended, therefore, that the specification and examples be considered as exemplary only, with a true scope and spirit of the disclosure being indicated by the following claims and their full scope of equivalents.

## Claims

1. A keypad assembly for a portable electronic device, comprising:
a keypad including a plurality of keys; and
a light guide for transmitting light from at least one light source, wherein the light guide includes at least one light source feature and at least one light guide feature, and the at least one light guide feature and the at least one light source feature have applied thereto a highly-reflective coating.

2. The keypad of claim 1, wherein the at least one light source feature is a negative feature surface.

3. The keypad of claim 1, wherein the at least one light source feature is disposed at a top planar surface of the light guide.

4. The keypad of claim 1, wherein the at least one light source feature is disposed at a top planar surface of the light guide and is vertically aligned with the at least one light source.

5. The keypad of claim 1, wherein the at least one light guide feature is a negative feature surface.

6. The keypad of claim 1, wherein the at least one light guide feature is disposed at a bottom planar surface of the light guide.

7. The keypad of claim 1, wherein the highly-reflective coating is applied to one or more surface faces of the at least one light guide feature and the at least one light source feature.

8. The keypad of claim 7, wherein the highly-reflective coating is a metal alloy.

9. The keypad of claim 7, wherein the highly-reflective coating is aluminum.

10. The keypad of claim 1, wherein the highly-reflective coating is a highly-reflective material applied to one or more surfaces of the at least one light guide feature and the at least one light source feature.

11. The keypad of claim 10, wherein the highly-reflective coating is a metal alloy.

12. The keypad of claim 10, wherein the highly-reflective coating is aluminum.

13. A light guide for transmitting light from at least one light source, comprising:
at least one light source feature; and
at least one light guide feature, wherein the at least one light guide feature and the at least one light source feature have applied thereto a highly-reflective coating.

14. The light guide of claim 13, wherein the at least one light source feature is a negative feature surface.

15. The light guide of claim 13, wherein the at least one light source feature is disposed at a top planar surface of the light guide.

16. The light guide of claim 13, wherein the at least one light source feature is disposed at a top planar surface of the light guide and is vertically aligned with the at least one light source.

17. The light guide of claim 13, wherein the at least one light guide feature is a negative feature surface.

18. The light guide of claim 13, wherein the at least one light guide feature is disposed at a bottom planar surface of the light guide.

19. The light guide of claim 13, wherein the highly-reflective coating is applied to one or more surface faces of the at least one light guide feature and the at least one light source feature.

20. The light guide of claim 19, wherein the highly-reflective coating is one of a metal alloy and aluminum.

## Amended claims

### Amended claims in accordance with Rule 137(2) EPC.

**1.** A light guide for transmitting light from at least one light source on a first planar surface of the light guide, comprising:
at least one indentation or protrusion, on a second planar surface of the light guide, aligned with the at least one light source; and
at least one indentation or protrusion on the first planar surface of the light guide; wherein
each indentation or protrusion has a highly-reflective coating applied thereto one or more surface faces of the indentation or protrusion.

**2.** The light guide of claim 1, wherein the at least one indentation or protrusion on the first planar surface of the light guide is arranged to direct light within the light guide.

**3.** The light guide of claim 1, wherein the at least one indentation or protrusion on the second planar surface of the light guide is arranged to direct light from the light source in a direction parallel to the second planar surface of the light guide so that substantially all of the light is transmitted through the light guide.

**4.** The light guide of claim 1, wherein the highly-reflective coating is one of a metal alloy and aluminum.

**5.** A keypad assembly for a portable electronic device, comprising:
a keypad including a plurality of keys; and
the light guide as defined in any preceding claim.

**6.** The keypad of claim 5, wherein the locations of the light sources and the locations of the indentations or protrusions on the first or second planar surface are determined by the arrangement of the keys on a keypad.

**7.** The keypad of claim 5, wherein the light sources, indentations and protrusions on the first or second planar surfaces are arranged to direct light toward keys at the edges of the keypad.
